# EUROPEAN PATENT SPECIFICATION

(11) **EP 1 526 679 B1**
(45) Date of publication and mention of the grant of the patent: **27.06.2007**
(21) Application number: 03292628.9
(22) Date of filing: 21.10.2003
(51) Int. Cl.: H04L 12/24, H04L 12/26

(54) **Methods relating to the monitoring of computer systems**
Verfahren zur Überwachung von Computer Systemen
Procédés pour la surveillance de systèmes d'ordinateurs

(43) Date of publication of application: 27.04.2005
(73) Proprietor: Hewlett-Packard Development Company, L.P., Houston, TX 77070 (US)
(72) Inventor: Leberre, Philippe, 38410, Vaulnaveys le Haut (FR); Delic, Kemal, 3800 Grenoble (FR)
(74) Representative: Lloyd, Richard Graham

(56) References cited:
- EP-A- 1 045 548
- US-A- 5 987 442
- US-A- 6 118 936
- GARDNER R D ET AL: "Methods and systems for alarm correlation" GLOBAL TELECOMMUNICATIONS CONFERENCE, 1996. GLOBECOM '96. 'COMMUNICATIONS: THE KEY TO GLOBAL PROSPERITY LONDON, UK 18-22 NOV. 1996, NEW YORK, NY, USA,IEEE, US, 18 November 1996 (1996-11-18), pages 136-140, XP010220339 ISBN: 0-7803-3336-5

## Description

### Technical Field of the Invention

This invention relates, in broad terms, to the field of computer systems and relates, more specifically but by no means exclusively, to methods whereby the condition of a computer network, such as that which may be associated with an enterprise, may be monitored.

### Background to the Invention and Overview of the Prior Art

As will be well-understood by those familiar with the relevant field, computer systems may take a great many forms, not only in terms of size and complexity, but also insofar as the nature of the various elements constituting the system are concerned.

It should also be understood, of course, that the term "computer system" is intended herein to be interpreted broadly, so as to encompass groups, combinations, arrangements or collections of data-processing devices that may have discrete capabilities but which may also, under some circumstances, interact to some extent and operate together.

A common form of computer system is a computer network, in which at least some of the system's elements are interconnected so that data may be passed between them, thus allowing facilitated data sharing, distribution and improved performance overall.

Computer networks, themselves, may take many forms, with the complexity, size and heterogeneity of some networks being such that it is difficult to obtain an overall view of how the network might be performing, at a given time.

US 2002/0133584A1 (Hewlett-Packard Company) discloses apparatus and methods relating to performance monitoring of a computer network, wherein a variety of status and current performance data and metrics may be collected and displayed on a web page. US'584A1 also discloses that "composite health scores" can be displayed, with composite values, indicative of a near "real time" assessment of the network's performance, being provided by a graphical display consisting of dial gauges, numerical text and bar charts.

US 5987442 discloses a method and apparatus for learning network behaviour trends and predicting future behaviour of communications networks, using a state transition graph, with the system monitoring the current state and current trends of the network parameters in order to predict and display future network states. US'442 also discloses the provision of an automatic warning signal for alerting the user that the network is headed in the direction of a problematic state.

US 6118936 discloses a signalling network management system which collects network topology, traffic, performance and fault information, and which correlates that information and displays it to system operators.

### Summary of the Invention

In accordance with a first aspect of the present invention, there is provided a method of monitoring the condition of a computer system, comprising receiving performance data from the system, processing the data to estimate the likelihood of a deterioration in the condition of the system and providing an output which is dependent upon the estimated likelihood; characterised in that external data, relating to elements outside the system being monitored, is used to estimate the likelihood of a deterioration in the condition of the system.

Account may be taken, when the likelihood is estimated, of previous system condition deteriorations and performance data in the periods leading up to such deteriorations.

In this way, an observer of the monitored system may be kept informed not only as to the current state and condition of the system but may also be advised, notified or warned that a deterioration in the condition of the system is likely to occur, where current performance data matches or is closely similar to historical performance data associated with a period leading up to a previous condition deterioration.

It will be understood that the likelihood of a deterioration occurring may be assessed in a variety of probabilistic manners, although the applicants suggest that a heuristic procedure might preferably be involved. Heuristics, as those skilled in the art will understand, is a probability methodology where previous experience can be used to modify more standard mathematical predictions, thus giving a more realistic indication of what is actually likely to happen, with a given set of circumstances. In a particularly-preferred embodiment, the applicants envisage that Bayesian networks, techniques and approaches may be used, so as to allow new evidence or experiences to modify or tailor existing estimates or beliefs.

The use of external data stems from the realisation, by the applicants, that events taking place beyond the boundaries of the system being monitored can have an immediate or short-term effect on the condition of the system. Thus, where the computer system is a network, the performance data may be received from some at least of the network devices and the external data may be related to the condition of an external element in communication with the monitored network.

The external data may relate to the prevalence and propagation of security threats such as viruses, worms and software "holes" (that may require patching), with it thus being desirable to monitor appropriate web sources, so that the existence of such threats may be kept track of.

The monitored network may be under the control of an enterprise but the external element may not be so controlled. Thus, the monitored network may be an enterprise LAN or WAN, with the external element perhaps constituting part of the Internet or World-Wide Web, which is connected to - but under no control of - the enterprise network.

The output may be conveyed in one or more of a plurality of forms but is preferably conveyed in a non-numerical or substantially non-numerical form.

In the case of large and complex enterprise networks (it is thought that the Hewlett Packard enterprise network, as a whole, comprises some 250,000 access devices, 4000 or so servers and 2000 routers) it will be appreciated that a large quantity of performance data will be assimilated with it being necessary to convey an "easily-digestible" summary of this information to a human user, so that appropriate action may be taken, if necessary. Whilst HP'584AI discloses that observed (but not predicted) data may be displayed using dial gauges and bar charts, such indicia require a substantial degree of human processing and interpretation, so that the performance information does not convey, at a glance, the overall the condition of the network, nor any indication of whether the condition is likely to deteriorate.

With this realisation, the current applicants suggest that a more human-intelligible output format will be used, with a preferred embodiment taking the form of a facial expression. In this way, a human, monitoring the output, may be able, at a glance, to gauge the condition of the system.

Measured and estimated system condition data may be conveyed using different features making up the overall facial expression. Using this approach, a poor system condition or a high likelihood of an imminent deterioration may be conveyed to a human observer by way of a concerned facial expression, whereas a contented facial expression may be used to indicate that the network is functioning well and that no short term deterioration in the network's condition is expected.

Thus, the degree of concern shown in the expression may be illustrative of the likelihood and/or extent of a condition deterioration.

### Brief Description Of The Drawings

Specific and non-limiting embodiments of the present invention will now be described, strictly by way of example only, with reference to the accompanying drawings, in which:
FIGURE 1 provides a schematic illustration of an enterprise network;
FIGURE 2 shows how measured system performance data may be processed so as to give rise to deterioration estimates;
FIGURE 3 shows an example of how a system condition may be conveyed; and
FIGURE 4 shows how different system conditions affect the output.

### Detailed Description of the Preferred Embodiments and Best Mode of the Invention

As is known to those skilled in the relevant art, large enterprises such as multi-national corporations, institutions and inter-governmental bodies may have a vast number of access devices (such as desktop computers, notebooks and PDA's), servers and enterprise-wide applications that, between them, constitute a networked computer system under the control of the enterprise. In some cases, very large enterprises may have several hundred thousand access devices, tens of thousands of servers and many thousands of enterprise-wide applications, which, between them, go to create a huge, complex and vulnerable computing domain. For many reasons, it is desirable to be able to monitor and assess the overall condition (current and future) of the system so that appropriate management decisions may be taken in an attempt to maintain system dependability and business continuity.

In some fields, enterprises may enter into Service Level Agreements (SLA's) which may require a party providing an IT service to monitor, perhaps on a continued basis, the availability, robustness and vulnerability of a given system, so that an indication may be obtained of how the service is performing.

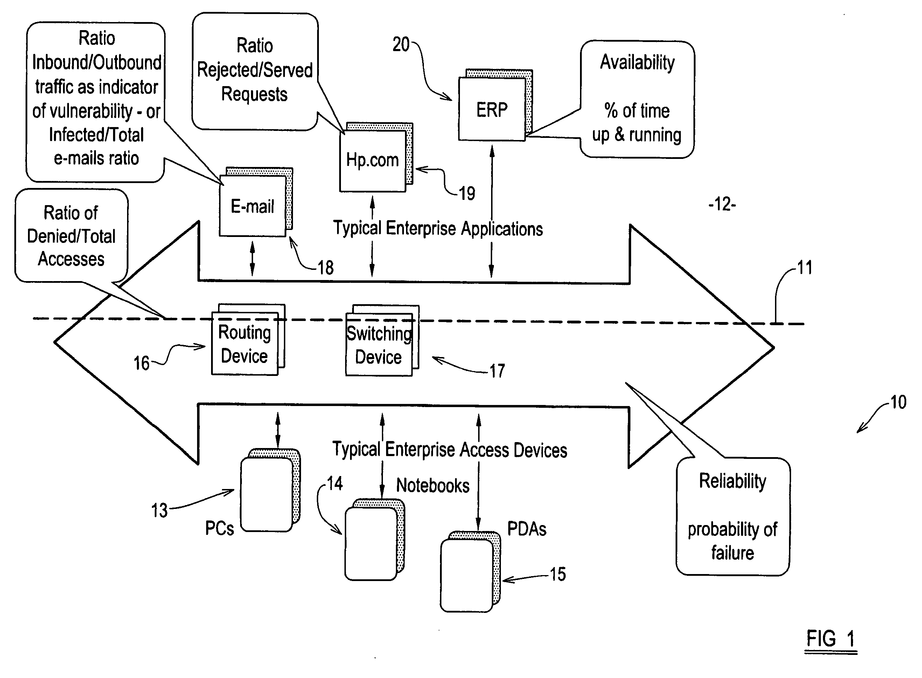

As an example, some principal elements of an enterprise network 10 are shown in Figure 1.

In generally conventional manner, the enterprise network 10 is connected - through a firewall 11 - to an external network 12, over which the enterprise has no control. In this example, the external network 12 may be provided by or consist of the Internet/World-Wide Web, although it will be understood that some of the enterprises's network capabilities may be provided by remote servers that are connected to an internal part of the network other than by way of a web connection.

The enterprise network 10 comprises, in this example, a plurality of PC's 13, note books 14 and PDA's 15 which, permanently or from time-to-time, are connected to the network so that users of such access devices may avail themselves of the resources provided by the network and so that a corresponding data exchange can take place.

The network 10 also comprises a plurality of network elements such as routers 16 and switches 17 and a variety of remote servers such as e-mail servers 18, web servers 19 and ERP (Enterprise Resource Planning) servers 20, which allow a commercial enterprise to provide B 2 B connectivity and the like.

It will be seen, from this, that a great many elements make up the overall enterprise network and that the current and future condition of the network will be influenced by many differing factors.

Performance data from the network can be used to provide a real-time (or at least near real-time) view of the network's condition, with it thus being necessary to monitor a variety of different performance metrics associated with the various elements constituting the network. In the case of the web server 19, the ratio of rejected to served requests can readily be monitored, with aggregate scores being provided, if necessary, for a plurality of such servers. In the case of the e-mail server 18, the ratio of inbound to outbound traffic can be taken as an indicator of vulnerability, as a very high outbound ratio may indicate, for example, the presence of a self-propagating e-mail virus, whereas a very high inbound ratio may indicate serious problems with an outbound gateway. Similarly, the ratio of infected to total e-mails may be calculated, as a rapidly increasing infected ratio may be indicative of future problems with other aspects of the enterprise IT infrastructure. Insofar as the firewall 11 is concerned, the ratio of denied to total network access requests can indicate the prevalence of malicious code beyond the firewall, with a high denied ratio suggesting that a viral attack might be underway.

Insofar as the ERP server 20 is concerned, an availability metric may be monitored, so as to establish the proportion or percentage of the time in which the ERP application is actually up and running.

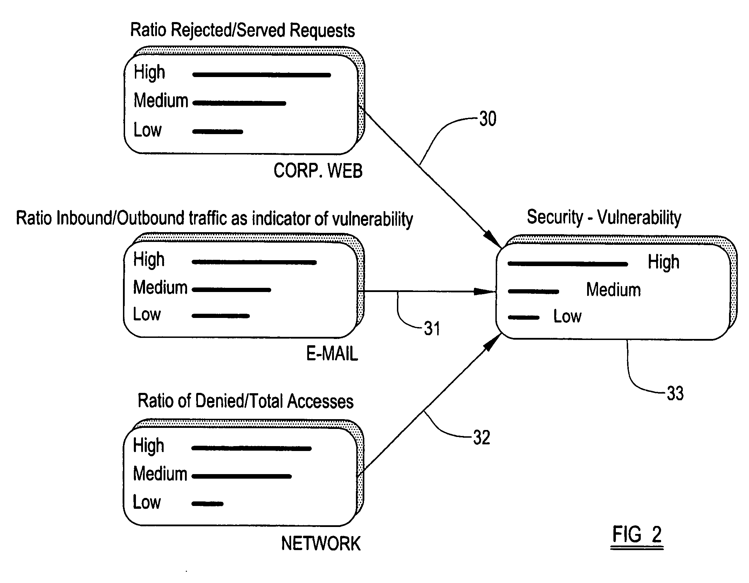

Figure 2 shows, in schematic form, how a range of measured values may be used to assess the security and vulnerability of the enterprise network. In Figure 2, inputs 30, 31 and 32 are combined and processed so as to give rise to an output 33 that is indicative of the security/vulnerability of the network. Input 30 relates to the ratio, in the corporate web server, of rejected to served requests, with a high ratio indicating the existence of an actual or potential problem. Input 31 relates to the ratio of inbound to outbound e-mail traffic, as an indicator of vulnerability, as explained above, whereas input 32 corresponds to the denied/total network accesses ratio, also as described above. Where each of the inputs 30, 31 and 32 have high values, indicative of problems with the corporate web server, e-mail server and network access, an appropriate aggregation algorithm (not shown) results in a "high" security/vulnerability output being produced, as it is likely, under such circumstances, that the enterprise network will be experiencing a security breach and that it is therefore vulnerable to a malicious attack, for example. On the other hand, where few corporate web server requests are rejected, where the ratio of inbound to outbound e-mail traffic is approximately one to one and wherein few network access requests are denied, the aggregation algorithm will be operative to give rise to a "low" security/vulnerability output, indicating that the enterprise network is performing well and that problems are not expected.

Although, to arrive at a "current performance" value, a simple aggregation step may suffice, the existence of past condition deteriorations and the performance data in the periods leading up to such occurrences may be used, so as to provide a more heuristic approach in arriving at the output data. More specifically, a Bayesian approach may be used, so that previous observations may be taken into account when the likelihood of a deterioration in the vulnerability of the system is assessed. Bayesian approaches are well known in the programming field (see, for example, HTTP://www.ai.mit.edu/murphyk/Bayes/economist.html) and it is not thus thought necessary to provide further detail thereon. Suffice it to say that where given input values 30, 31 and 32 have resulted, in the past, in security breaches or increases in the vulnerability of the network, then such experiences can be incorporated within the output-generation algorithm so that a later occurrence of the same or similar input values will give rise to an appropriate probability of the same security issues arising, once again.

In addition to security/vulnerability issues (in other words, the likelihood or probability of a system break-in), the reliability and robustness of the system can be monitored, so as to give rise to a likelihood or probability of a system failure, as can the availability of the system, measured in terms of the system's up-time.

In order to arrive at a likelihood of a system failure, heuristic/Bayesian approaches can also be used, so as to take account of previous occurrences of system failures and the various performance metrics that were observed in the periods leading up to such events. In the case of system availability, probabilistic approaches may not be necessary, as it may suffice simply to monitor the proportion/percentage of the time for which a given enterprise application is available.

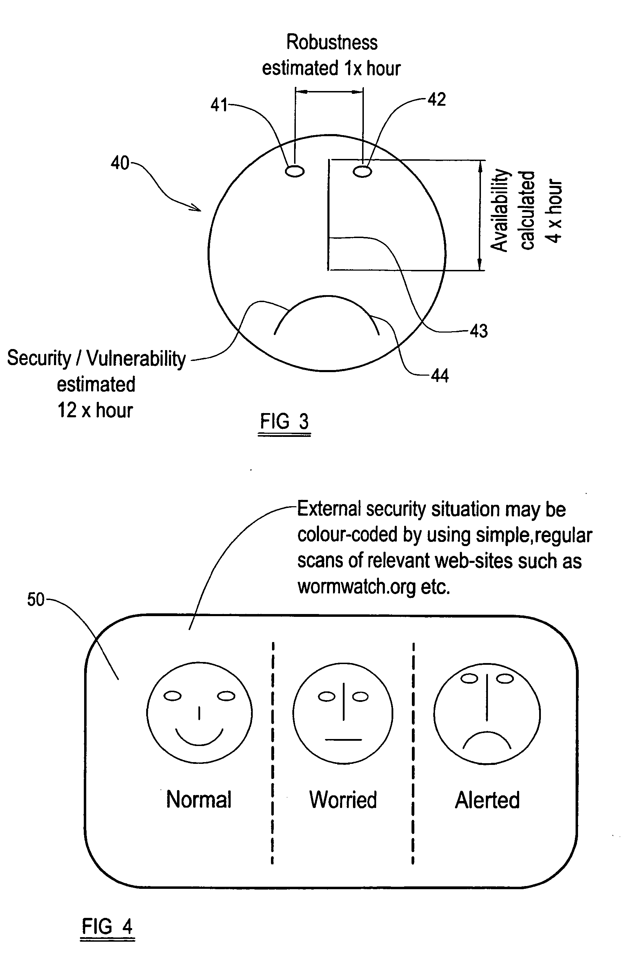

However the output values are arrived at, it is important that a readily-accessible output format be used, so as to allow a human observer thereof to be able to gauge, at a glance, the overall condition of the system, without the necessity of making any calculations or performing any assessment tasks. With that in mind, a preferred output format makes use of the realisation that human beings respond instinctively and almost instantaneously to the facial expressions, observable moods and degrees of concern expressed by other human beings or by non-human representations of such expressions. In this preferred embodiment, therefore, the various output parameters are displayed in the form of a variable facial expression, as shown in Figure 3. A simple representation of such an expression is shown at 40, in which the robustness of the monitored system influences the separation of the eyes 41 and 42 of the face, the system availability affects the length of the nose 43 and wherein the security/vulnerability aspects are influential on the shape and positioning of the mouth 44. As shown in Figure 3, the various parameters may be monitored/processed at differing frequencies, with the frequencies depending upon the previously-observed rate of change of the parameters concerned and the degree of importance given to them, by system administrators, for example. Thus, at one extreme, security and vulnerability issues may be estimated every five minutes, as new viruses and worms can affect the vulnerability of a computer network very rapidly. On the other hand, where system availability is calculated, it may suffice to perform this assessment only once every fifteen minutes, with system robustness being assessed, for example, once every hour. It will be understood that the three basic elements constituting the expression 40 are each variable and that even minor variations in one of the elements can give rise to a substantial difference in "feeling" that is conveyed to a human observer.

This is illustrated in Figure 4, in which the left hand face signifies normal operating conditions, the central face indicates a degree of worry, meaning that some aspects of the monitored system may not be performing satisfactorily and in which the right hand face, conveying an expression of concern, is effective, instinctively and at a glance, to convey the existence of actual or imminent system deteriorations to the observer.

It will be understood, from this, that no analysis, decoding or processing is required, by the observer, for him/her to understand, in a relative sense, the status of the system being monitored.

As shown in Figure 4, the display includes a background element 50 which, in this example, is a simple colour shading, against which the facial expressions are displayed. The background display is illustrative of the status of an external network (such as the Internet) so that the condition of the enterprise network being monitored may be viewed in the context of what is occurring beyond its boundaries. In the case of the Internet, this external security situation may be monitored by accessing relevant sites such as a wormwatch.org, so as to obtain information relating to newly-released viruses and worms, for example. Connections to real-time news feeds may also be used so that the existence of external security concerns can be conveyed, in parallel with the condition of the system being monitored. As an example, a green background may serve to indicate that all is well, from an external perspective, whereas a red background may serve to indicate that a web-wide virus has been released, and that appropriate action ought therefore to be taken to ensure that the enterprise's fire walls and network defence infrastructures are up to date and functioning correctly.

The external situation may also be used when the likelihood of a system condition deterioration is being assessed: thus, where, in the past, a newly-released e-mail virus caused significant downtime on the enterprise's e-mail server, the later reoccurrence of such an event could be used to tailor the estimated likelihood of a repeat deterioration in the system's condition.

As will be understood from the foregoing, the invention provides a system condition monitoring method that offers predictive functionality, a readily-intelligible output format and a parallel monitoring service related to an external security situation. This enables senior management, for example, to gauge the condition of an enterprise network at a glance, and thus for remedial action to be taken, if necessary, without the need for prior complex data analysis or interpretation of system performance results. In that regard, the applicants envisage that the generated graphical display described herein may be present, on an "always-on" basis, on the desktops and portable devices of appropriate senior management personnel. It should also be noted that the output need not, necessarily, be in a graphical form: the applicants envisage, perhaps, that an audible representation of the system's condition might be used, with the tone, pitch, key or tune of an audio stream being altered, in accordance with the condition. Thus, a pleasant-sounding tune may be indicative of a healthy system condition whereas the presence of dischords and tonal clashes might signify that the network condition is deteriorating or that it may shortly do so. An olfactory output is also suggested, whereby a smell generating device, perhaps associated with a mobile communications device, might be used, to trigger unpleasant smells where the network condition is found to be deteriorating.

## Claims

1. A method of monitoring the condition of a computer system (10), comprising receiving performance data (30, 31, 32) from the system, processing the data to estimate the likelihood (33) of a deterioration in the condition of the system and providing an output which is dependent upon the estimated likelihood; **characterised in that** external data, relating to elements outside the system being monitored, is used to estimate the likelihood of a deterioration in the condition of the system.

2. A method according to claim 1 wherein account is taken, when the likelihood is estimated, of previous system condition deteriorations and performance data in the periods leading up to such deteriorations.

3. A method according to claim 1 or claim 2 wherein the likelihood is estimated using a heuristic procedure.

4. A method according to any one of the preceding claims wherein the likelihood is estimated using a Bayesian technique.

5. A method according to claim 1 wherein the computer system is a network (10), the performance data being received from some at least of the network devices (13, 14, 15) and the external data being related to the condition of an external element in communication with the monitored network.

6. A method according to claim 5 wherein the monitored network (10) is under the control of an enterprise but wherein the external element is not so controlled.

7. A method according to any one of the preceding claims wherein the output (33) is conveyed in a non-numerical or substantially non-numerical form.

8. A method according to any one of the preceding claims wherein the output is conveyed in the form of a facial expression (40).

9. A method according to claim 8 wherein the degree of concern shown in the expression (40) is illustrative of the likelihood and/or extent of a condition deterioration.

## Patentansprüche

1. Ein Verfahren zum Überwachen des Zustands eines Computersystems (10), das ein Empfangen von Leistungsfähigkeitsdaten (30, 31, 32) von dem System, ein Verarbeiten der Daten, um die Wahrscheinlichkeit (33) einer Verschlechterung bei dem Zustand des Systems zu schätzen, und ein Liefern einer Ausgabe aufweist, die von der geschätzten Wahrscheinlichkeit abhängig ist; **dadurch gekennzeichnet, dass** externe Daten, die sich auf Elemente außerhalb des Systems beziehen, das überwacht wird, verwendet werden, um die Wahrscheinlichkeit einer Verschlechterung bei dem Zustand des Systems zu schätzen.

2. Ein Verfahren gemäß Anspruch 1, bei dem, wenn die Wahrscheinlichkeit geschätzt wird, vorhergehende Systemzustandsverschlechterungen und Leistungsfähigkeitsdaten in den Zeiträumen berücksichtigt werden, die zu derartigen Verschlechterungen führen.

3. Ein Verfahren gemäß Anspruch 1 oder Anspruch 2, bei dem die Wahrscheinlichkeit unter Verwendung einer heuristischen Prozedur geschätzt wird.

4. Ein Verfahren gemäß einem der vorhergehenden Ansprüche, bei dem die Wahrscheinlichkeit unter Verwendung einer Bayes-Technik geschätzt wird.

5. Ein Verfahren gemäß Anspruch 1, bei dem das Computersystem ein Netzwerk (10) ist, die Leistungsfähigkeitsdaten von zumindest einigen der Netzwerkgeräte (13, 14, 15) empfangen werden und die externen Daten auf den Zustand eines externen Elements bezogen sind, das in Kommunikation mit dem überwachten Netzwerk steht.

6. Ein Verfahren gemäß Anspruch 5, bei dem das überwachte Netzwerk (10) unter der Steuerung eines Unternehmens ist, wobei aber das externe Element nicht so gesteuert ist.

7. Ein Verfahren gemäß einem der vorhergehenden Ansprüche, bei dem die Ausgabe (33) in einer nichtnumerischen oder im Wesentlichen nichtnumerischen Form gefördert wird.

8. Ein Verfahren gemäß einem der vorhergehenden Ansprüche, bei dem die Ausgabe in der Form eines Gesichtsausdrucks (40) gefördert wird.

9. Ein Verfahren gemäß Anspruch 8, bei dem der Grad an Besorgnis, der in dem Ausdruck (40) gezeigt ist, die Wahrscheinlichkeit und/oder das Ausmaß einer Zustandsverschlechterung darstellt.

## Revendications

1. Procédé de surveillance de l'état d'un système informatique (10), comprenant la réception de données de performances (30, 31, 32) depuis le système, le traitement des données pour estimer la probabilité (33) de dégradation de l'état du système et la fourniture d'une sortie qui dépend de la probabilité estimée ; **caractérisé en ce que** des données externes, concernant des éléments extérieurs au système surveillé, sont utilisées pour estimer la probabilité d'une dégradation de l'état du système.

2. Procédé selon la revendication 1, dans lequel, lorsque la probabilité est estimée, on prend en compte les dégradations antérieures de l'état du système et les données de performances durant les périodes conduisant à de telles dégradations.

3. Procédé selon la revendication 1 ou la revendication 2, dans lequel la probabilité est estimée en utilisant une procédure heuristique.

4. Procédé selon l'une quelconque des revendications précédentes, dans lequel la probabilité est estimée en utilisant une technique bayesienne.

5. Procédé selon la revendication 1, dans lequel le système informatique est un réseau (10), les données de performances étant reçues depuis au moins certains des dispositifs du réseau (13, 14, 15) et les données extérieures étant associées à l'état d'un élément extérieur en communication avec le réseau surveillé.

6. Procédé selon la revendication 5, dans lequel le réseau surveillé (10) est sous le contrôle d'une entreprise, mais dans lequel l'élément extérieur n'est pas contrôlé de cette manière.

7. Procédé selon l'une quelconque des revendications précédentes, dans lequel la sortie (33) est acheminée sous une forme non numérique ou sensiblement non numérique.

8. Procédé selon l'une quelconque des revendications précédentes, dans lequel la sortie est acheminée sous la forme de l'expression d'un visage (40).

9. Procédé selon la revendication 8, dans lequel le degré d'inquiétude présenté dans l'expression (40) est représentatif de la probabilité et/ou de l'importance de la dégradation de l'état.
